# EUROPÄISCHE PATENTSCHRIFT

(11) **EP 2 095 871 B1**
(45) Veröffentlichungstag und Bekanntmachung des Hinweises auf die Patenterteilung: **25.07.2012**
(21) Anmeldenummer: 09150599.0
(22) Anmeldetag: 15.01.2009
(51) Int. Cl.: B01J 8/00, F01N 3/20

(54) **Dosiervorrichtung für Feststoffpellets einer Ammoniak abspaltenden Substanz**
Metering device for solid pellets of a substance with ammoniac separating action
Dispositif de dosage pour pellets de matière solide d'une substance séparant l'ammoniac

(30) Priorität: 23.02.2008 DE 102008010801
(43) Veröffentlichungstag der Anmeldung: 02.09.2009
(73) Patentinhaber: Pierburg GmbH, 41460 Neuss (DE)
(72) Erfinder: Riedlinger, Udo, 41468 Neuss (DE); Tönnesmann, Andres, Dr., 52066 Aachen (DE); Köster, Andreas, 45149 Essen (DE); Nowak, Martin, 51379 Leverkusen (DE)
(74) Vertreter: ter Smitten, Hans

(56) Entgegenhaltungen:
- EP-A- 0 234 332
- EP-A- 1 882 833
- EP-A- 1 939 421
- WO-A-2004/042209

## Beschreibung

Die Erfindung betrifft eine Dosiervorrichtung für Feststoffpellets einer Ammoniak abspaltenden Substanz, Insbesondere Harnstoff, mit einem Vorratsbehälter zur Speicherung der Feststoffpellets, einer Vereinzelungseinrichtung zum Bereitstellen von Feststoffpellets aus dem Vorratsbehälter, welche eine bewegbare Fördereinrichtung aufweist und einer Zuführeinrichtung zum Transportieren der Feststoffpellets aus der Vereinzelungseinrichtung zu einer Aufbereitungseinrichtung.

Zur Aufbereitung von in Kraftfahrzeugen entstehenden Abgasen ist es bekannt, dem Abgas eine Ammoniak abspaltende Substanz zuzuführen. Bekannt sind hier insbesondere Systeme, bei denen flüssiger Harnstoff zugeführt wird. Zusätzlich sind Entwicklungen bekannt, bei denen der Harnstoff in Form von Feststoffpellets zugeführt wird. Die Aufbereitung des Harnstoffs erfolgt zunächst in einer Thermolyseeinrichtung, der die Festharnstoffpartikel zugeführt werden. Hier wird der Harnstoff unter Einbringung von Wärme im Wesentlichen thermisch in Ammoniak und Isocyansäure zersetzt. Das entstehende Gasgemisch wird daraufhin zumeist in eine Hydrolyseeinrichtung geleitet, in der die Isocyansäure unter Einbringung von Wasser in Ammoniak und Kohlendioxyd zersetzt wird. In einem nachgeschalteten SCR-Katalysator können dann schädliche Stickoxyde mit Hilfe des Ammoniaks in Stickstoff und Wasser zersetzt werden.

Zum Bereitstellen der Feststoffpellets für die Aufbereitungseinrichtung werden Dosiervorrichtungen verwendet. Hierbei sind sowohl pneumatisch arbeitende Dosierungen bekannt als auch rotatorisch beschleunigende Dosierer. Die bekannten pneumatischen Dosiervorrichtungen bestehen in der Regel aus einem Vorratsbehälter, in welchen die Feststoffpellets gefüllt werden und an dessen Grund ein Zellenrad angeordnet ist, welches Kammern aufweist, von denen jeweils eine mit einem Luftkanal verbindbar ist, über den das entsprechende Feststoffpellet aus der jeweiligen Kammer und der Dosiervorrichtung in einen Kanal gefördert werden, der zur Aufbereitungseinrichtung führt.

Eine derartige Dosiervorrichtung für Feststoffpellets ist beispielsweise aus der DE 10251498 bekannt. Am Boden des Vorratsbehälters ist hier rotatorisch das Zellenrad angeordnet, über welches die Feststoffpellets vereinzelt werden und zum pneumatischen Kanal geführt werden.

Nachteilig an einer derartigen Ausführung ist jedoch, dass die Pellets des Vorratsbehälters auf der Oberfläche der Vereinzelungseinrichtung aufliegen und somit bei der rotatorischen Bewegung der Vereinzelungseinrichtung auch die Feststoffpellets mit bewegt werden. Auf Grund der Füllhöhe und der Trägheitskräfte der Feststoffpellets entsteht somit eine Relativbewegung zwischen den einzelnen Schichten der Feststoffpellets und der Vereinzelungseinrichtung. Dies führt zu einem unerwünschten Abrieb an den Feststoffpellets, welcher sich beispielsweise zwischen dem Boden des Vorratsbehälters und dem sich drehenden Förderrad festsetzt, wodurch Schädigungen am Förderrad auftreten können. Hierdurch würde ein Schwergängigkeit oder im schlimmsten Falle eine Blockade folgen, welche lediglich durch eine höhere Antriebskraft des antreibenden Motors gegebenenfalls aufzuheben wäre.

Daher ist es Aufgabe der Erfindung, Beschädigungen am Förderrad zu vermeiden und die Antriebskraft zum Bewegen der Vereinzelungseinrichtung möglichst gering zu halten. Hierzu soll die Staubbildung durch die Relativbewegung der Teilchen zueinander möglichst weitgehend verringert werden.

Diese Aufgabe wird dadurch gelöst, dass geodätisch oberhalb der bewegbaren Fördereinrichtung eine feststehende Abdeckeinrichtung angeordnet ist, auf die zumindest ein Teil der Gewichtskraft der im Vorratsbehälter befindlichen Feststoffpellets wirkt.

Durch eine derartige Abdeckeinrichtung wird, je nach Lage der Abdeckeinrichtung, die Anzahl der sich im Vorratsbehälter bewegenden Feststoffpellets mehr oder weniger verringert. Zusätzlich wird durch die geringere, auf die Feststoffpellets wirkende Gewichtskraft der auf die unteren Feststoffpellets wirkende Druck verringert, so dass auch bei Auftreten einer Relativbewegung auf Grund des geringeren Widerstandes weniger Abrieb entsteht. Somit bleibt die Vereinzelungseinrichtung leichtgängig.

In einer besonderen Ausführung weist die Abdeckeinrichtung ein Schild auf, welches beabstandet von der bewegbaren Fördereinrichtung angeordnet ist und dessen senkrechte Projektionsfläche die Fördereinrichtung überdeckt. Dies hat zur Folge, dass die unterhalb der Abdeckeinrichtung liegenden Feststoffpellets oberhalb der Fördereinrichtung nicht durch die gesamte Gewichtskraft belastet werden und somit ohne größeren Widerstand sich mit der Fördereinrichtung bewegen können.

In einer hierzu weiterführenden Ausführungsform weist das Schild eine Hohlkegelform mit in Richtung zur Fördereinrichtung abfallenden Außenwänden auf. Eine derartige Form stellt sicher, dass eine freie Beweglichkeit unterhalb des Hohlkegels durch die Feststoffpellets vorliegt.

In einer weiteren alternativen oder zusätzlichen Ausführung weist die Abdeckeinrichtung einen ersten Abdeckkörper auf, der sich unmittelbar oberhalb der bewegbaren Fördereinrichtung von einer Innenwand des Vorratsbehälters im Wesentlichen bis zu einer Außenkante von Förderkammern der Fördereinrichtung erstreckt. Ein derartiger Abdeckkörper stellt im Außenumfangsbereich sicher, dass keine Relativbewegung von der Fördereinrichtung auf die Pellets übertragen werden kann, da kein direkter Kontakt in diesem Bereich vorhanden ist. Auch hierdurch wird zusätzliche Staubbildung vermieden.

In einer weiteren Ausführung ist die bewegbare Fördereinrichtung ein rotatorisch bewegbares Förderrad mit über einen festen Umfang verteilten Förderkammem und die Abdeckeinrichtung weist einen zweiten Abdeckkörper auf, der sich unmittelbar oberhalb der bewegbaren Fördereinrichtung im Wesentlichen von der Drehachse der Fördereinrichtung bis zu einer Innenkante der Förderkammern der Fördereinrichtung erstreckt. Bei einer derartigen Ausführung wird eine Übertragung der Relativbewegung über den inneren Bereich des Förderrades vermieden. Bei gleichzeitiger Verwendung der ersten Abdeckeinrichtung ergibt sich somit lediglich die Möglichkeit der Übertragung einer Relativbewegung im Bereich des Spaltes, unter dem die Förderkammem angeordnet sind.

In einer bevorzugten Ausführungsform weist der erste und/oder der zweite Abdeckkörper eine zum Vorratsbehälter weisende Oberfläche auf, welche in Richtung der Förderkammem abfällt. Eine derartig abfallende Oberfläche stellt die Förderung der Pellets in den Spalt bzw. in die Förderkammem des Förderrades sicher und erhöht somit die Zuverlässigkeit beim Einbringen der Feststoffpellets zur Aufbereitungseinrichtung.

In einer bevorzugten Ausführungsform ist die Abdeckeinrichtung einteilig ausgeführt und weist den ersten und den zweiten Abdeckkörper auf. Eine Verbindung dieser beiden Abdeckkörper wäre beispielsweise über sternförmig angeordnete Stege zwischen den beiden Abdeckkörpern möglich. Hierdurch vereinfacht sich der Zusammenbau einer derartigen erfindungsgemäßen Dosiervorrichtung.

In einer hierzu alternativen Ausführung ist das Schild zumindest indirekt an der Innenwand des Vorratsbehälters befestigt und an einer Unterseite des Schildes ist ein Fuß befestigt oder ausgebildet, der den zweiten Abdeckkörper bildet. Bei einer derartigen Ausführung kann beispielsweise das Schild über sternförmig angeordnete Stege befestigt werden, so dass der Fuß und somit der zweite Abdeckkörper unmittelbar über dem Förderrad schwebt. Auch bei einer derartigen Ausführung wird die Relativbewegung der Teilchen weitestgehend vermieden und zusätzlich der Widerstand bei der Bewegung der Teilchen unterhalb des Schildes verringert.

Es zeigt sich, dass durch eine derartig ausgebildete Dosiervorrichtung deutlich weniger Staub durch Relativbewegung der Teilchen und dem dort vorhandenen Widerstand durch die Gewichtskraft der Feststoffpellets entsteht, so dass kleinere Antriebe verwendet werden können und eine Blockade oder Schwergängigkeit der Fördereinrichtung vermieden wird. Hierbei ist es sowohl denkbar, auftretende Relativbewegungen zwischen Förderrad und Feststoffpellets bzw. den Feststoffpellets untereinander weitestgehend zu vermeiden als auch die Bewegung der Feststoffpellets außerhalb der Förderkammern zu verhindern. Es können hierdurch kleinere Antriebe verwendet werden.

Ein Ausführungsbeispiel ist in den Zeichnungen dargestellt und wird nachfolgend beschrieben.
Figur 1 zeigt eine schematische Seitenansicht einer Dosiervorrichtung.
Figur 2 zeigt eine Teilschnittansicht der erfindungsgemäßen Dosiervorrichtung aus Figur 1.

Die Dosiervorrichtung weist einen Vorratsbehälter 10 auf, der mit Feststoffpellets gefüllt ist. Dieser Behälter 10 kann entweder nachfüllbar sein oder als austauschbare Patrone ausgebildet werden. Selbstverständlich ist es sinnvoll, einen derartigen Vorratsbehälter mit einer Füllstandsüberwachung auszuführen.

Der Vorratsbehälter 10 ist an seiner Unterseite 12 durch eine Vereinzelungseinrichtung 14 verschlossen. Diese Vereinzelungseinrichtung 14 weist eine bewegbare Fördereinrichtung 16, die in vorliegendem Ausführungsbeispiel als Förderrad ausgeführt ist, auf, welches über eine Antriebseinrichtung 18, hier in Form eines Elektromotors rotatorisch angetrieben wird.

Die Vereinzelungseinrichtung 14 wirkt mit einer Zuführeinrichtung 20 zusammen, welche aus einer Pumpe 22 sowie einer Leitung 24 besteht, über welche Druckluft in einen definierten Bereich der bewegbaren Fördereinrichtung 16 geleitet wird. Eine weitere Auslassleitung 26 der Zuführeinrichtung 20 verbindet wiederum einen definierten Bereich der bewegbaren Fördereinrichtung 16 mit einer nachgeschalteten, nicht dargestellten Aufbereitungseinrichtung, führt also zu einem Thermolysereaktor. Mit Hilfe der Zuführeinrichtung 20 werden Feststoffpellets aus der Vereinzelungseinrichtung 14 bzw. der bewegbaren Fördereinrichtung 16 pneumatisch zur Aufbereitungseinrichtung gefördert.

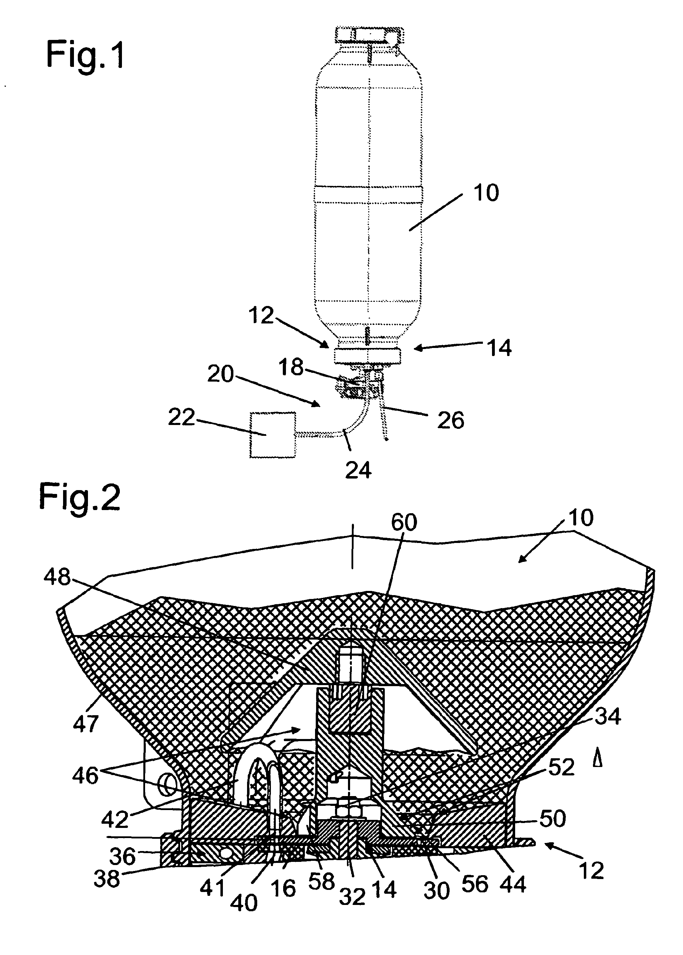

In Figur 2 ist das Innere der Dosiervorrichtung mit Teilen des Vorratsbehälters 10 sowie der Vereinzelungseinrichtung 14 dargestellt.

Die bewegbare Fördereinrichtung 16 in Form des Förderrades weist Förderkammern 30 auf, die gleichmäßig über einen definierten Umfang im weiter außen liegenden Bereich des Förderrades 16 angeordnet sind. Das Förderrad 16 ist an einer Antriebswelle 32 über eine Mutter 34 befestigt. Die Antriebswelle 32 ist entweder direkt als Abtriebswelle des Antriebes 18 ausgeführt oder zumindest mit der Abtriebswelle des Antriebs 18 entsprechend gekoppelt. Eine derartige Kopplung kann beispielsweise auch zur Untersetzung über ein Getriebe stattfinden.

Der Vorratsbehälter 10 wird an seinem geodätisch unten liegenden Ende durch einen Boden 36 der Vereinzelungseinrichtung 14 geschlossen. Diese Vereinzelungseinrichtung 14 kann beispielsweise durch eine Überwurfmutter 38 am unteren offenen Bereich des Vorratsbehälters 10 befestigt werden.

Der Boden 36 weist eine Auslassbohrung 40 auf, welche mit der Auslassleitung 26 verbunden ist. Im Inneren des Vorratsbehälters 10 befindet sich eine Förderleitung 42, welche fluidisch mit der Auslassbohrung 40 durchlaufend über je eine Förderkammer 30 verbunden ist. Diese Förderleitung 42 wird im außen liegenden Bereich durch die Leitung 24 weiter zur Pumpe 22 geführt. Entsprechend kann Druckluft über die Pumpe 22 und die Leitung 24 in die Förderleitung 42 strömen, so dass ein pneumatischer Druck auf ein Feststoffpellet entsteht, welches sich in einer Förderkammer 30 zwischen der Förderleitung 42 und der Auslassbohrung 40 befindet. Durch diesen Druck wird das entsprechende Pellet in die Auslassleitung 26 gefördert.

Durch die rotatorische Bewegung des Förderrades 16 werden somit nacheinander die hintereinander auf dem Umfang des Förderrades 16 verteilten Förderkammern 30 über die Auslassbohrung 40 bewegt, so dass nacheinander die verschiedenen Pellets in die Leitung 26 gefördert werden.

Die von unten ins Innere des Vorratsbehälters 10 führende Förderleitung 42 reicht durch eine entsprechende Bohrung 41 in einem ersten Abdeckkörper 44 der im vorliegenden Ausführungsbeispiel an einer Innenwand 46 des Vorratsbehälters 10 befestigt ist.

Dieser Abdeckkörper 44 ist Teil einer Abdeckeinrichtung 46, welche zusätzlich aus einem hohlkegelförmigen Schild 48 sowie einem zweiten Abdeckkörper 50 besteht.

Der erste Abdeckkörper 44 weist eine Oberfläche 52 auf, welche nach radial innen abfällt. Der Innendurchmesser dieses ersten Abdeckkörpers 44 entspricht im Wesentlichen einem Umfang, der durch eine Außenkante der Förderkammern 30 gebildet wird. Im vorliegenden Ausführungsbeispiel umgibt dieser Abdeckkörper 44 das Förderrad 16 radial und ist im Bereich zwischen der Außenkante der Förderkammern 30 und dem Außenumfang des Förderrades 16 unmittelbar oberhalb des Förderrades 16 angeordnet, so dass keine Pellets zwischen das Förderrad 16 und den ersten Abdeckkörper 44 gelangen können. Lediglich im Bereich der Förderleitung 42 ist der erste Abdeckkörper 44 etwas breiter ausgeführt, so dass an dieser Stelle die Innenkante weiter zur Drehachse über das Förderrad 16 reicht. Dieser Bereich ist in der linken Bildhälfte dargestellt, und wird nur so groß ausgeführt, dass eine ausreichende Festigkeit des ersten Abdeckkörpers 44 im Bereich der Förderleitung 42 sichergestellt wird. Im übrigen Verlauf weist der erste Abdeckkörper 44 einen konstanten Innendurchmesser oberhalb des Förderrades 16 auf.

Während die Oberfläche 52 eines äußeren Bereiches 54 des ersten Abdeckkörpers 44 lediglich geringfügig nach innen abfallend ausgebildet ist, wird diese Steigung im Bereich nahe der Außenkante der Förderkammern 30 deutlich steiler, so dass im Zusammenspiel mit dem zweiten Abdeckkörper 50 ein Spalt 56 ausgebildet wird, in dem möglichst nur einzelne Kugeln unmittelbar über den Förderkammern 30 Raum finden.

Der zweite Abdeckkörper 50 ist im vorliegenden Ausführungsbeispiel als Fuß eines Schildes 48 ausgeführt und weist unmittelbar oberhalb des Förderrades 16 im Wesentlichen einen Außendurchmesser auf, der im Wesentlichen dem Durchmesser entspricht, der durch die Innenkanten der Förderkammern 30 aufgespannt wird. Von hier aus erstreckt sich die Oberfläche des zweiten Abdeckkörpers 50 in einem Winkel von etwa 45 ° nach oben. Ausnahme bildet hier wiederum der Bereich der Förderleitung 42, in dem der Fuß 50 eine Ausnehmung 58 aufweist. Etwa in Höhe der Oberkante des ersten Abdeckkörpers 44 geht die Form des zweiten Abdeckkörpers im Wesentlichen in eine sich noch oben erstreckende Stangenform über. Der zweite Abdeckkörper 50 wird über eine Schraube 60 am hohlkegelförmigen Schild 48 befestigt, welches wiederum an der Innenwand 46 des Vorratsbehälters befestigt ist. Somit schwebt der zweite Abdeckkörper 50, befestigt am Schild 48, unmittelbar oberhalb des Förderrades 16.

Wie bereits erwähnt, weist das Schild 48 eine Hohlkegelform auf, so dass der im Behälter befindliche Pelletvorrat zwar von oben auf das Schild 48 drückt, jedoch unterhalb dieses Schildes, im Bereich des Hohlkegels im Wesentlichen keine Feststoffpellets vorhanden sind.

Die Funktion der Abdeckeinrichtung 46, bestehend aus dem ersten Abdeckkörper 44, dem zweiten Abdeckkörper 50 sowie dem Schild 48, besteht nun darin, dass zunächst das Schild die Gewichtskraft der Feststoffpellets oberhalb des Förderrades 16 abfängt. Somit kann lediglich eine definierte reduzierte Füllhöhe als Gewichtskraft auf das Förderrad 16 wirken. Diese Füllhöhe entspricht im Wesentlichen dem Abstand zwischen der Oberseite des Förderrades 16 und der Unterkante des Hohlkegelendes des Schildes 48. Hierzu ist die Grundfläche des kegelförmigen Schildes 16 zumindest so groß zu wählen, dass die Projektionsfläche des Schildes die bewegbare Fördereinrichtung 16 vollständig überdeckt.

Durch den ersten Abdeckkörper 44 und den zweiten Abdeckkörper 50 wird zusätzlich eine Relativbewegung zwischen dem Förderrad 16 und den Feststoffpellets weitestgehend vermieden, da die Feststoffpellets auf den feststehenden Abdeckkörpern 44, 50, lagern. Eine derartige Relativbewegung findet somit lediglich in dem Spalt 56 zwischen den beiden Abdeckkörpern 44 und 50 im Bereich oberhalb der Förderkammern 30 statt. Hier wirkt jedoch nur eine geringe Gewichtskraft durch die Abschirmung durch das Schild 48 auf die Pellets. Da der Spalt 56 sehr klein ist, wird auch eine Übertragung in außen- oder innenliegende Umfangsbereiche des Spaltes 56 weitestgehend vermieden. Dennoch wird durch die abfallenden Oberflächen eine zuverlässige Zuführung der Pellets in die Förderkammern 30 sichergestellt.

Es entstehen somit nur geringe Reibungskräfte zwischen den Feststoffpellets, da nur eine geringe Anzahl dieser tatsächlich über den Förderkammerspalt bewegt werden und auf diesen nur eine geringe Gewichtskraft wirkt. Somit wird Abrieb innerhalb des Vorratsbehälters zum großen Teil vermieden, so dass zum Antrieb beispielsweise ein Elektromotor mit geringerer Leistung verwendet werden kann. Eine Schwergängigkeit oder Blockade wird somit weitestgehend ausgeschlossen.

Selbstverständlich können auch konstruktiv anders gestaltete Abdeckeinrichtungen vorgesehen werden, mittels derer zuverlässig eine Übertragung der Bewegung einer Fördereinrichtung 16 auf die Pellets vermieden werden soll. Insbesondere kann auch das Schild 48 als separates Bauteil ausgeführt werden und der erste Abdeckkörper 44 mit dem zweiten Abdeckkörper 50 einteilig ausgeführt werden. Denkbar sind zusätzlich andersartig ausgeführte Fördereinrichtungen, beispielsweise in Form von Förderbändern, welche jedoch auf ähnliche Art und Weise abgeschirmt und abgedeckt werden können, um diese Staub erzeugenden Reibungen durch die entstehenden Relativbewegungen zu vermeiden.

## Patentansprüche

1. Dosiervorrichtung für Feststoffpellets einer Ammoniak abspaltenden Substanz, insbesondere Harnstoff,
mit einem Vorratsbehälter (10) zur Speicherung der Feststoffpellets,
einer Vereinzelungseinrichtung (14) zum Bereitstellen von Feststoffpellets aus dem Vorratsbehälter (10), welche eine bewegbare Fördereinrichtung (16) aufweist und
einer Zuführeinrichtung (20) zum Transportieren der Feststoffpellets aus der Vereinzelungseinrichtung (14) zu einer Aufbereitungseinrichtung
**dadurch gekennzeichnet, dass**
geodätisch oberhalb der bewegbaren Fördereinrichtung (16) eine feststehende Abdeckeinrichtung (46) angeordnet ist, auf die zumindest ein Teil der Gewichtskraft der im Vorratsbehälter (10) befindlichen Feststoffpellets wirkt.

2. Dosiervorrichtung für Feststoffpellets einer Ammoniak abspaltenden Substanz, insbesondere Harnstoff, nach Anspruch 1,
**dadurch gekennzeichnet, dass**
die Abdeckeinrichtung (46) ein Schild (48) aufweist, welches beabstandet von der bewegbaren Fördereinrichtung (16) angeordnet ist und dessen senkrechte Projektionsfläche die Fördereinrichtung (16) überdeckt.

3. Dosiervorrichtung für Feststoffpellets einer Ammoniak abspaltenden Substanz, insbesondere Harnstoff, nach Anspruch 2,
**dadurch gekennzeichnet, dass**
das Schild (48) eine Hohlkegelform mit in Richtung zur Fördereinrichtung (16) abfallenden Außenwänden (60) aufweist.

4. Dosiervorrichtung für Feststoffpellets einer Ammoniak abspaltenden Substanz, insbesondere Harnstoff, nach einem der vorhergehenden Ansprüche,
**dadurch gekennzeichnet, dass**
die Abdeckeinrichtung (46) einen ersten Abdeckkörper (44) aufweist, der sich unmittelbar oberhalb der bewegbaren Fördereinrichtung (16) von einer Innenwand (47) des Vorratsbehälters (10) im Wesentlichen bis zu einer Außenkante von Förderkammern (30) der Fördereinrichtung (16) erstreckt.

5. Dosiervorrichtung für Feststoffpellets einer Ammoniak abspaltenden Substanz, insbesondere Harnstoff, nach einem der vorhergehenden Ansprüche
**dadurch gekennzeichnet, dass**
die bewegbare Fördereinrichtung (16) ein rotatorisch bewegbares Förderrad mit über einen festen Umfang verteilten Förderkammern (30) ist und die Abdeckeinrichtung (46) einen zweiten Abdeckkörper (50) aufweist, der sich unmittelbar oberhalb der bewegbaren Fördereinrichtung (16) im Wesentlichen von der Drehachse bis zu einer Innenkante der Förderkammern (30) der Fördereinrichtung (16) erstreckt.

6. Dosiervorrichtung für Feststoffpellets einer Ammoniak abspaltenden Substanz, insbesondere Harnstoff, nach Anspruch 4 oder 5,
**dadurch gekennzeichnet, dass**
der erste Abdeckkörper (44) und/oder der zweite Abdeckkörper (50) eine zum Vorratsbehälter (10) weisende Oberfläche (52) aufweist, welche in Richtung der Förderkammern (30) abfällt.

7. Dosiervorrichtung für Feststoffpellets einer Ammoniak abspaltenden Substanz, insbesondere Harnstoff, nach einem der Ansprüche 4 bis 6,
**dadurch gekennzeichnet, dass**
die Abdeckeinrichtung (46) einteilig ausgeführt ist und den ersten Abdeckkörper (44) und den zweiten Abdeckkörper (50) aufweist.

8. Dosiervorrichtung für Feststoffpellets einer Ammoniak abspaltenden Substanz, insbesondere Harnstoff, nach einem der Ansprüche 5 bis 6,
**dadurch gekennzeichnet, dass**
das Schild (48) zumindest indirekt an der Innenwand (47) des Vorratsbehälters (10) befestigt ist und an einer Unterseite des Schildes (48) ein Fuß befestigt oder ausgebildet ist, der den zweiten Abdeckkörper (50) bildet.

## Claims

1. Metering device for solid pellets of a substance, in particular urea, with ammoniac separating action,
comprising a reservoir (10) for storing the solid pellets,
a singling device (14) for providing solid pellets from the reservoir (10), the device having a movable conveyor means (16), and
a supply opening (20) for transporting the solid pellets from the singling means (14) to a processing means,
**characterized in that**
a fixed cover means (46) is disposed geodetically above the movable conveyor means (16), on which at least a part of the weight force of the solid pellets in the reservoir (10) acts.

2. Metering device for solid pellets of a substance, in particular urea, with ammoniac separating action, as defined in claim 1, **characterized in that** the cover means (46) comprises a shield (48) which is arranged at a distance from the movable conveyor means (16) and whose vertical projected area covers the conveyor means (16).

3. Metering device for solid pellets of a substance, in particular urea, with ammoniac separating action, as defined in claim 2, **characterized in that** the shield (48) has the shape of a hollow cone whose outer walls (60) slope towards the conveyor means (16).

4. Metering device for solid pellets of a substance, in particular urea, with ammoniac separating action, as defined in one of the preceding claims, **characterized in that** the cover means (46) comprises a first cover element (44) that extends directly above the movable conveyor means (16) from an inner wall (47) of the reservoir (10) substantially to an outer edge of conveyor chambers (30) of the conveyor means (16).

5. Metering device for solid pellets of a substance, in particular urea, with ammoniac separating action, as defined in one of the preceding claims, **characterized in that** the movable conveyor means (16) comprises a rotatable conveyor wheel with conveyor chambers (30) distributed over a fixed perimeter, and the cover means (46) comprises a second cover element (50) extending immediately above the movable conveying means (16) substantially from the rotational axis to an inner edge of the conveyor chambers (30) of the conveyor means (16).

6. Metering device for solid pellets of a substance, in particular urea, with ammoniac separating action, as defined in claim 4 or 6, **characterized in that** the first cover element (44) and/or the second cover element (50) has a surface directed towards the reservoir (10), which surface slopes towards the conveyor chambers (30).

7. Metering device for solid pellets of a substance, in particular urea, with ammoniac separating action, as defined in one of claims 4 to 6, **characterized in that** the cover means (46) is monolithic and comprises the first cover element (44) and the second cover element (50).

8. Metering device for solid pellets of a substance, in particular urea, with ammoniac separating action, as defined in one of claims 5 to 6, **characterized in that** the shield (48) is fastened at least indirectly to the inner wall (47) of the reservoir (10) and a foot is fastened or formed at a lower side of the shield (48) that forms the second cover element (50).

## Revendications

1. Dispositif de dosage pour pellets de matière solde d'une substance séparant l'ammoniac, en particulier l'urée,
avec un réservoir (10) pour stocker les pellets de matière solde,
un moyen de séparation (14) pour fournir des pellets de matière solide á partir du réservoir (10), le moyen comprenant un moyen de transport (16) mobil, et
un moyen d'alimentation (20) pour transporter les pellets de matière solide à partir du moyen de séparation (14) jusqu'à un moyen de traitement,
**caractérisé en ce que**
un moyen de couverture (48) fixe est disposé géodésiquement au-dessus du moyen de transport (16) mobil, au moins une partie de la pesanteur des pellets de matière solide dans ledit réservoir agissant sur ledit moyen de couverture.

2. Dispositif de dosage pour pellets de matière solde d'une substance séparant l'ammoniac, en particulier l'urée, selon la revendication 1, **caractérisé en ce que** ledit moyen de couverture (46) comprend un écran (48) disposé à distance du moyen de transport (16) mobil et dont la surface de projection recouvre ledit moyen de transport (16).

3. Dispositif de dosage pour pellets de matière solde d'une substance séparant l'ammoniac, en particulier l'urée, selon la revendication 2, **caractérisé en ce que** ledit écran (48) a la forme d'un cône creux à parois externes (60) en pente vers le moyen de transport (16).

4. Dispositif de dosage pour pellets de matière solde d'une substance séparant l'ammoniac, en particulier l'urée, selon l'une quelconque des revendications précédentes, **caractérisé en ce que** le moyen de couverture (46) comprend un premier élément de couverture (44) s'étendent directement au-dessus du moyen de transport (16) mobil à partir d'une paroi interne (47) dudit réservoir (10) sensiblement jusqu'à un bord extérieur de chambres de transports (30) dudit moyen de transport (16).

5. Dispositif de dosage pour pellets de matière solde d'une substance séparant l'ammoniac, en particulier l'urée, selon l'une quelconque des revendications précédentes, **caractérisé en ce que** le moyen de transport (16) comprend une roue de transport rotative avec des chambres de transport (30) reparties sur une périphérie fixe, et le moyen de couverture (46) comprend un deuxième élément de couverture (50) qui s'étend directement au-dessus du moyen de transport (16) mobil sensiblement à partir de l'axe de rotation jusqu'à un bord intérieur des chambres de transport (30) du moyen de transport (16).

6. Dispositif de dosage pour pellets de matière solde d'une substance séparant l'ammoniac, en particulier l'urée, selon l'une quelconque des revendications 4 ou 5, **caractérisé en ce que** ledit premier élément de couverture (44) et/ou ledit deuxième élément de couverture (50) comprend une surface (52) orientée vers ledit réservoir (10), ladite surface étant en pente vers les chambres de transport (30).

7. Dispositif de dosage pour pellets de matière solde d'une substance séparant l'ammoniac, en particulier l'urée, selon l'une quelconque des revendications 4 à 6, **caractérisé en ce que** ledit moyen de couverture (46) est réalisé en une partie et comprend ledit premier élément de couverture (44) et ledit deuxième élément de couverture (50).

8. Dispositif de dosage pour pellets de matière solde d'une substance séparant l'ammoniac, en particulier l'urée, selon l'une quelconque des revendications 5 à 6, **caractérisé en ce que** ledit écran (48) est au moins indirectement fixé à la paroi interne (47) dudit réservoir (10) et un pied est fixé ou formé au dessous dudit écran (48), qui forme ledit deuxième élément de couverture (50).
